# EUROPEAN PATENT APPLICATION

(11) **EP 1 041 490 A1**
(43) Date of publication of application: **04.10.2000**
(21) Application number: 00302350.4
(22) Date of filing: 22.03.2000
(51) Int. Cl.: G06F 13/38

(54) **Method to increase the I/O performance of a computer**

(30) Priority: 31.03.1999 US 283339
(71) Applicant: Hewlett-Packard Company, Palo Alto, California 94304 (US)
(72) Inventor: Taugher, Lawrence N., Loveland, CO 80537 (US); McCarthy, Donald F., Westminster, CO 80030 (US); Wahl, Mark A., Fort Collins, CO 80521 (US)
(74) Representative: Jackson, Richard Eric

(57) **Abstract**

A method to increase the I/O performance of a peripheral device by allowing multiple connections or I/O channels between the host computer and the peripheral device. The multiple I/O channels can be two or more USB connections, or one or more USB connections in combination with another connection type like parallel, or a serial connection. The data to be transferred is broken into numbered packets and sent across the multiple I/O channels and then reassembled at the receiving end. By taking advantage of more than one I/O channel the data rate between the peripheral device and the host computer can be increased.

## Description

### FIELD OF THE INVENTION

The field of this invention is generally peripheral devices connected to a personal computer. More specifically this invention is a method to increase the I/O performance of a peripheral device by allowing multiple connections or I/O channels between the host computer and the peripheral device.

### BACKGROUND OF THE INVENTION

Computer peripherals connect to computers using a number of different I/O channels. These I/O channels are typically divided into low speed channels, like the serial interface or the parallel interface, and moderate to high-speed channels, like the SCSI interface. In the past personal computers typically came with 1 serial channel or bus and 1 parallel channel or bus. Each bus could typically control or connect to only one peripheral device. Some peripheral devices could be daisy chained on the parallel bus to increase the number of devices on that parallel bus. Daisy chaining was accomplished by having a peripheral device pass through the commands for a peripheral device further down the bus. Users having more peripheral devices than channels could use switch boxes to choose between the peripheral devices or could install additional I/O channels. There is a limit on the number of additional I/O channels that can be added to a personal computer. The more host computer resources that the I/O channel uses, the fewer additional I/O channels that can be added. The parallel I/O channel typically requires host computer intervention for each byte transferred across the bus. This high intervention requirement restricts the number of parallel buses that can operate at the maximum I/O transfer rate of approximately 1Mbyte/sec in a host computer. These two problems, one device per channel and high host resource requirements, led to the development of the new I/O channel Universal Serial Bus or USB. The USB bus also solved other usability problems with I/O channels for personal computers (PC). The USB bus is "hot pluggable" meaning that peripheral devices can be added and removed from the system with out having to power down the PC or "rebooting". The USB bus also has a "plug & play" feature where the PC and peripheral device self configure without user intervention.

USB's architecture and chip set implementation resulted in a moderate to low speed bus that requires minimal host computer intervention. USB is a "star" architecture that allows up to 128 peripheral devices to connect to the host computer. With an I/O bus, like parallel, that typically had only one port or connection, port became synonymous with bus. With a USB bus, port means a connection to the bus. All the peripherals connected to one USB bus, through multiple ports, share the approximately 1Mbyte/sec total bandwidth of the USB bus. Because the USB bus requires minimal host intervention, more than one USB bus can be connected to a single host computer and still maintain the maximum I/O rate for each bus. Most new computers now come with a serial bus, a parallel bus, and a USB bus. In the future 2 USB buses may become standard.

Peripheral devices can be classified by the I/O speed requirements. There are low-speed devices like mice and keyboards, moderate-speed devices like printers and CD-RW drives, and high-speed devices like hard disk drives. Currently, on lower cost PC's, if a user wishes to use an external high-speed peripheral at maximum speed they are required to install a high-speed I/O channel, like SCSI, into their host computer. Installation of high-speed I/O channels requires the user to remove the cover of the computer and install an additional card into the back plane of the computer. Many users do not feel comfortable installing cards into a computer. This is a barrier to sales. The other option is to connect the high-speed peripheral device to a moderate-speed I/O channel, such as parallel or USB, and live with the reduction in performance. There is a need for a high-speed I/O connection between peripheral devices and a host computer that does not require the user to install additional I/O cards into the back plane of the computer.

### SUMMARY OF THE INVENTION

A method to increase the I/O performance of a peripheral device by allowing multiple connections or I/O channels between the host computer and the peripheral device. The multiple I/O channels can be two or more USB connections, or one or more USB connections in combination with another connection type like parallel, or a serial connection. The data to be transferred is broken into numbered packets and sent across the multiple I/O channels and then reassembled in the host computer or the peripheral device. By taking advantage of more than one I/O channel the data rate between the peripheral device and the host computer can be increased.

### BRIEF DESCRIPTION OF THE DRAWINGS

Figure 1 is the transmitter flow chart for sending data across multiple I/O channels.
Figure 2 is the flow chart for the send data loop.
Figure 3 is the receiver data flow chart for receiving data across multiple I/O channels.

### DETAILED DESCRIPTION OF THE PREFERRED EMBODIMENT

A peripheral device that transfers data across multiple I/O channel connections can greatly increase the I/O performance of a single I/O channel. For example, a peripheral device that connects to a parallel port and a USB port on a host computer can transfer data at approximately 1Mbyte/sec across the parallel bus and 1Mbyte/sec across the USB bus for a total of 2Mbytes/sec to the host computer. Even including the overhead time to create and reassemble the data packets, it is expected that the final data rate will be close to doubled. By using more than 2 channels the I/O rate may be trebled or more. By using more than one existing I/O channel the increase in I/O performance can be obtained without the requirement of opening the computer to install additional I/O cards.

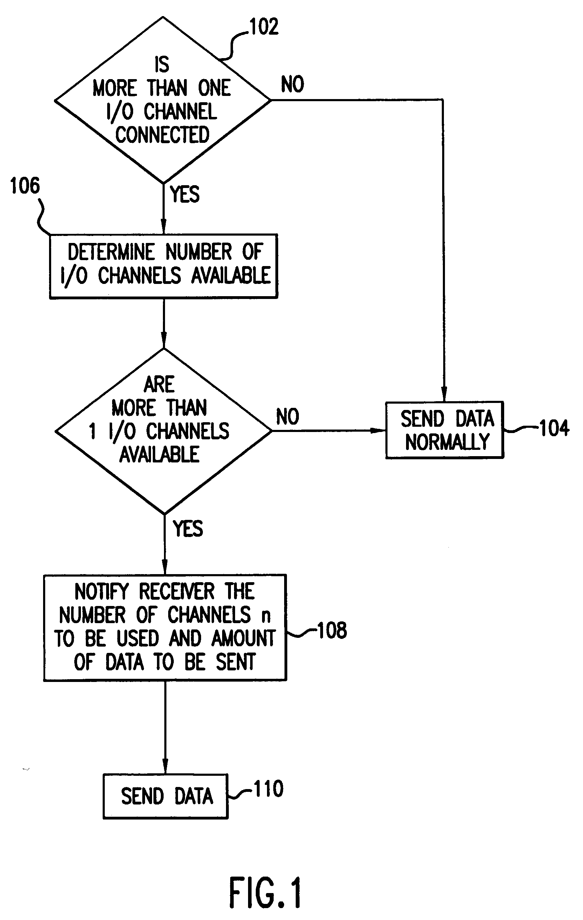

Figure 1 is a flow chart of one embodiment of the invention. During the transfer of data there is a data transmitter and a data receiver. When data needs to be transferred from the peripheral device to the host the peripheral device is the data transmitter and the host is the data receiver. When the data is transferred from the host to the peripheral device the host is the data transmitter and the peripheral device is the data receiver. As shown in figure 1, the first step for the data transmitter is to determine if more than one I/O channel is connecting the host and the peripheral device 102. When there is only one I/O channel connected the data is transmitted normally 104. When there is more than one I/O channel connected, the data transmitter determines how many I/O channels are available to transmit the data 106. n is the total number of channels available. When only one I/O channel is available data is transmitted normally 104. When more than one I/O channel is available the data transmitter informs the data receiver how many I/O channels n will be used and how much data will be transferred 108. The data is then simultaneously sent over the multiple I/O channels 110.

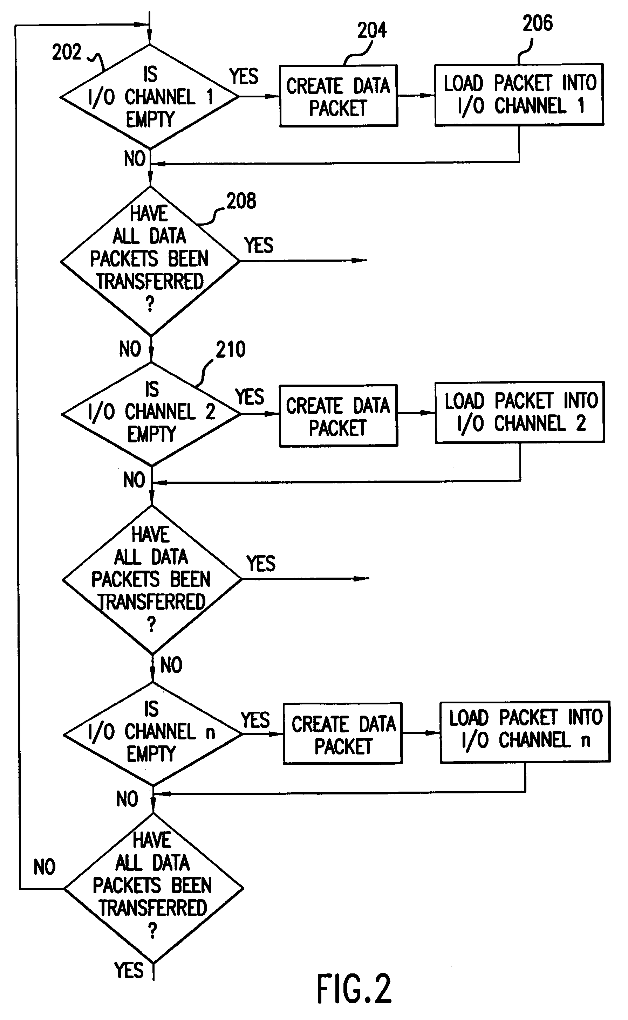

To send data simultaneously on multiple I/O channels each I/O channel must be supplied with data whenever the I/O channel is empty. Typically I/O channels send data in pieces or packets. Each I/O channel may send a different amount of data for each packet. Therefore the data packet for each I/O channel may be a different size and be sent at different rates. Figure 2 shows the flow chart for the loop that keeps each I/O channel supplied with data. I/O channel 1 is checked to see if it requires any data 202. When I/O channel one is empty a data packet of the correct size for I/O channel 1 is created and tagged 204 and then loaded into I/O channel one 206. The packet is tagged so the data can be reassembled on the receive side. The tag can be the number of the packet created or any other unique identification of the packet sequence. Once the data packet is loaded into I/O channel 1 a check is made to determine if any data is left to send 208. When more data needs to be sent the next I/O channel is checked to see if it requires any data 210. When an I/O channel does not require any data (i.e. it's not empty) the next I/O channel in the loop is checked. This loop is repeated, checking each I/O channel from one to n where n is the total number of I/O channels available, until all the data has been transferred.

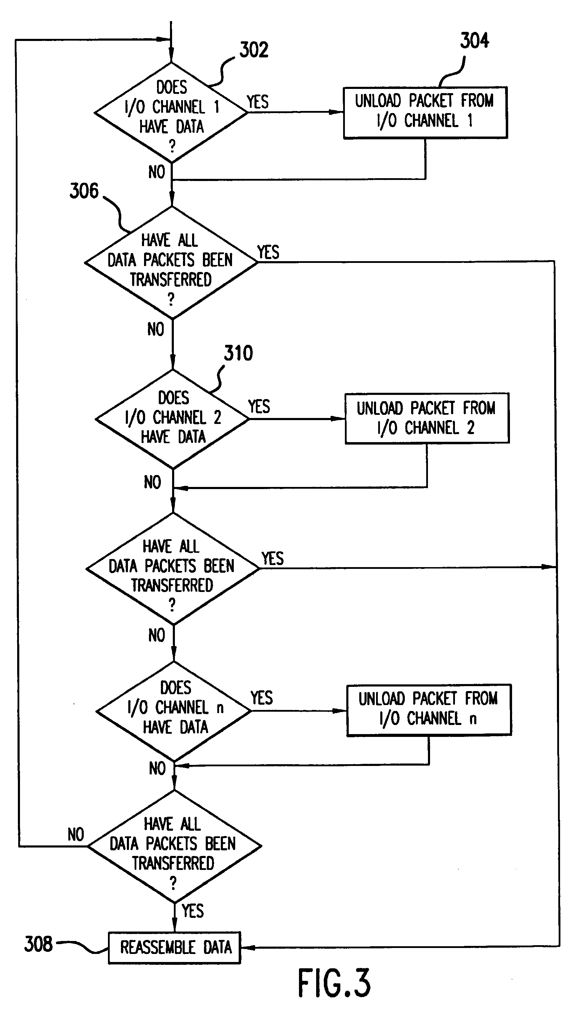

Figure 3 shows the flow chart for receiving the data. I/O channel 1 is checked to see if a packet has been received 302. When a packet has been fully received it is unloaded from I/O channel one 304. A check is made to determine if all the data packets have been received 306. When all the data packets have been received the data is reassembled in the correct order 308. The data can also be reassembled as the packets are received to reduce the amount of buffering required to store the data packets. When there is more data to be received the next I/O channel in the loop is checked for a data packet 310. This loop is repeated, checking each I/O channel from one to n where n is the total number of I/O channels available, until all the data has been transferred. By using multiple I/O channels the total data rate between the host and the peripheral device can be increased.

## Claims

1. A method of transferring data between a host computer and a peripheral device comprising the steps of:
connecting the peripheral device to the host computer with at least two input/output channels(106);
sending data simultaneously over the multiple input/output channels(110).

2. The method of claim 1 further comprising the steps of:
grouping the data to be transferred over the input/output channel into packets(204);
tagging each packet such that the order of the packets can be determined;
reassembling the data from the tagged packets(308).

3. The method of claim one where one of the input/output channels is a USB bus.

4. The method of claim one where one of the input/output channels is a parallel bus.

5. The method of claim one where one of the input/output channels is a serial bus.

6. The method of claim one where one of the input/output channels is a USB bus and one of the input/output channels is a parallel bus.

7. The method of claim one where one of the input/output channels is a USB bus and one of the input/output channels is a serial bus.

8. The method of claim one where two of the input/output channels are USB buses.

9. The method of claim 2 where one of the input/output channels is a USB bus.

10. The method of claim 2 where one of the input/output channels is a parallel bus.

11. The method of claim 2 where one of the input/output channels is a serial bus.

12. The method of claim 2 where one of the input/output channels is a USB bus and one of the input/output channels is a parallel bus.

13. The method of claim 2 where one of the input/output channels is a USB bus and one of the input/output channels is a serial bus.

14. The method of claim 2 where two of the input/output channels are USB buses.
